# EUROPEAN PATENT APPLICATION

(11) **EP 0 989 198 A1**
(43) Date of publication of application: **29.03.2000**
(21) Application number: 99610047.5
(22) Date of filing: 30.08.1999
(51) Int. Cl.: C23C 4/02, C23C 4/18, A47J 36/02, B05D 5/08

(54) **A method for coating kitchen utensils**

(30) Priority: 28.08.1998 DK 108798
(71) Applicant: Pyrolux A/S, 8550 Ryomgaard (DK)
(72) Inventor: Brund, Knud Hougaard, 8900 Randers (DK); Moeller, Bent, 8900 Randers (DK)
(74) Representative: Nielsen, Henrik Sten

(57) **Abstract**

By a method for coating a core body (12), preferably a core body of aluminium, in kitchen utensils, various layers (14, 16, 18, 20, 22) of hard ceramic powder of one or more materials are first applied by means of plasma spraying. An antiadhesion layer (124) is applied to the ceramic layer or layers (14, 16, 18, 20, 22) established of hard ceramic powder material by plasma spraying in one or more steps. By the method the last applied ceramic layer (22) is established by using a hard ceramic powder of a smaller average grain size compared with the other ceramic powder layers, preferably in such a way that the average grain size of the individually applied layers (14, 16, 18, 20, 22) of hard ceramic powder decreases from the core body (12) towards the antiadhesion layer (124). Hereby, compared with known methods for coating a core body in kitchen utensils, a better adhesion of the antiadhesion layer to the ceramic layer and, furthermore, a more uniform and cavity free surface of the antiadhesion layer are achieved when as a last ceramic layer a fine-grained ceramic layer is established for providing a close, uniform and smooth ceramic surface without actual cavities.

## Description

The present invention relates to the manufacture of household articles, in particular kitchen utensils, by which method various layers of hard ceramic powder of one or more materials are applied to a core body, preferably a core body of aluminium, by means of plasma spraying whereupon an antiadhesion layer is applied to the ceramic layer or layers established of hard ceramic powder by plasma spraying in one or more steps.

In German patent publication DE 36 04 762 a technique is disclosed in the case of which a coating is made according to the method mentioned above. In the German patents DE 38 06 699 and DE 38 44 522, the corresponding European patents EP 0 331 155 and EP 0 523 761 as well as the corresponding Danish patents DK 171162 and DK 171058 further developments of the general combined plasma spraying and antiadhesion layer application technique are disclosed for instance described in the former German patent.

In accordance with the technique disclosed in DE 38 06 699 a layer building-up is carried out on the core body, as according to this patent publication a better adhesion of the antiadhesion layer should allegedly be obtainable by providing a pronouncedly porous surface of the ceramic structure, as a layer building-up of a steadily increasing grain size is made from the core body towards the surface, to which the antiadhesion layer is to be applied, in order to achieve exactly the pronouncedly porous structure.

The applicant, a manufacturer of kitchen utensils and according to contractual agreements with PTG/Euroflamm, has long experience of manufacturing such kitchen utensils and has in this connection utilised the technique disclosed in the above Danish, German and European patent applications relating to the building-up of an increasing grain size from the core body and out-wards. Thus, the applicant has found that this technique is not quite satisfactory as exactly the pronouncedly porous structure of the ceramic layer results in a relatively poor adhesion of the antiadhesion layer and forms pockets in the antiadhesion layer in which pockets material, typically fat, may accumulate which burns into the anti-adhesion layer and consequently results in a discoloration of the antiadhesion layer and causes the formation of points or areas in which charred food scraps accumulate. Thus, the applicant has, after having used a manufacturing technique by which a growing grain size structure was established according to the technique disclosed in the above German and European patents as well as the above Danish patent application, rejected this technique and has for some time used a uniform grain size during the plasma spraying. However, there has been a continuous wish for improving the plasma spraying technique in order to, firstly, establish a better adhesion of the antiadhesion layer to the ceramic layer, if possible, and, secondly, A more uniform surface of the antiadhesion layer without cavities in which, as described above, food scraps, particularly charred fat particles or other accumulations, may accumulate.

Thus, there is a need for achieving an improvement of the general technique for manufacturing kitchen utensils by spraying ceramic powder by means of plasma spraying and subsequently applying antiadhesion layers, in the case of which technique, on one hand, an improved adhesion of the antiadhesion layer to the ceramic layer is obtained and, on the other hand, a more smooth and more uniform, cavity free surface of the antiadhesion layer is achieved.

This need is met according to the teachings of the present invention by making an application of the last ceramic layer by the method stated above by using a hard ceramic powder of a smaller average grain size compared to the other ceramic powder layers. Thus, in direct contravention of the technical teachings stated in the above Danish, German and European patents, experience has shown that an improved adhesion of the antiadhesion layer to the ceramic layer and, furthermore, a more uniform and cavity free surface of the antiadhesion layer are achieved when as a last ceramic layer a fine-grained ceramic layer is established for providing a close, uniform and smooth ceramic surface without actual cavities.

In accordance with the presently preferred embodiment of the method according to the present invention it is preferred that a building-up of a ceramic layer or a structure is made wherein the average grain size of the individually applied layers of hard ceramic powder decreases from the core body towards the antiadhesion layer, whereby exactly the provision of the uniform, close and cavity free surface of the ceramic structure is established as a result of a filling of possible cavities in the more coarse-grained ceramic layers by the later filling with the fine-grained ceramic powder.

In accordance with the technique described in the above-mentioned German patent DE 36 04 762 it is preferred that a priming of the core body is made during the plasma application by applying a nickel-containing adhesion primer layer as the first plasma application step.

In accordance with the basic realisation for the present invention that a filling of possible cavities is preferably to be made in the ceramic structure unlike the prior art in the case of which cavities are established, it is preferred that a layer of hard ceramic powder is established at the transition between the adhesion primer layer and the actual ceramic structure, which layer is applied to the nickel-containing adhesion layer containing a share of nickel powder. Thus, in this first applied hard ceramic powder layer a transition between the adhesion primer layer and the actual ceramic structure is established.

In accordance with the presently preferred embodiments of the method according to the present invention it is preferred that the adhesion primer layer has a thickness of 1-20 µm, preferably 1-10 µm, such as 5-10 µm, and that the individual ceramic layers have a thickness of 1-50 µm, such as 5-40 µm, preferably 5-20 µm.

The application of the last ceramic powder layer characteristic of the present invention and of a smaller average grain size compared with the other ceramic powder layers is preferably carried out by using ceramic powders, wherein the average grain size of the finest used ceramic powders is between 5 and 20 µm and the size of the coarsest used ceramic powders is between 10 and 40 µm.

In accordance with the presently preferred embodiments of the method according to the present invention an arbitrary number of powder layers may be applied to an applied nickel-containing adhesion primer layer wherein the ceramic layer applied to the first applied, nickel-containing adhesion primer layer preferably contains a smaller share, such as less than 50%, for instance 10-40%, such as 20-30% nickel powder, as explained above. As ceramic powder chromium, titanium or other suitable, in principle inert metal powders or oxides thereof as well as alloys or mixtures of such materials may be used.

The antiadhesion layer which is applied to the ceramic structure may be applied in one single step by applying a one-component teflon-containing baking enamel or, alternatively, in two or more steps by using a first component containing a primer enamel, preferably a pigment-containing primer enamel, and subsequently by applying a teflon-containing baking enamel also containing pigments in one or more separate steps.

The present invention will be further described with reference to the drawing, in which
Fig. 1 shows a schematic and perspective view of a plant for carrying out the method according to the present invention, i.e. to be used for application in the case of plasma spraying of powder on kitchen utensils,
Fig. 2 shows a vertical section of a product manufactured according to the present invention and
Fig. 3 shows a product, in particular a frying pan, manufactured in accordance with the method according to the present invention.

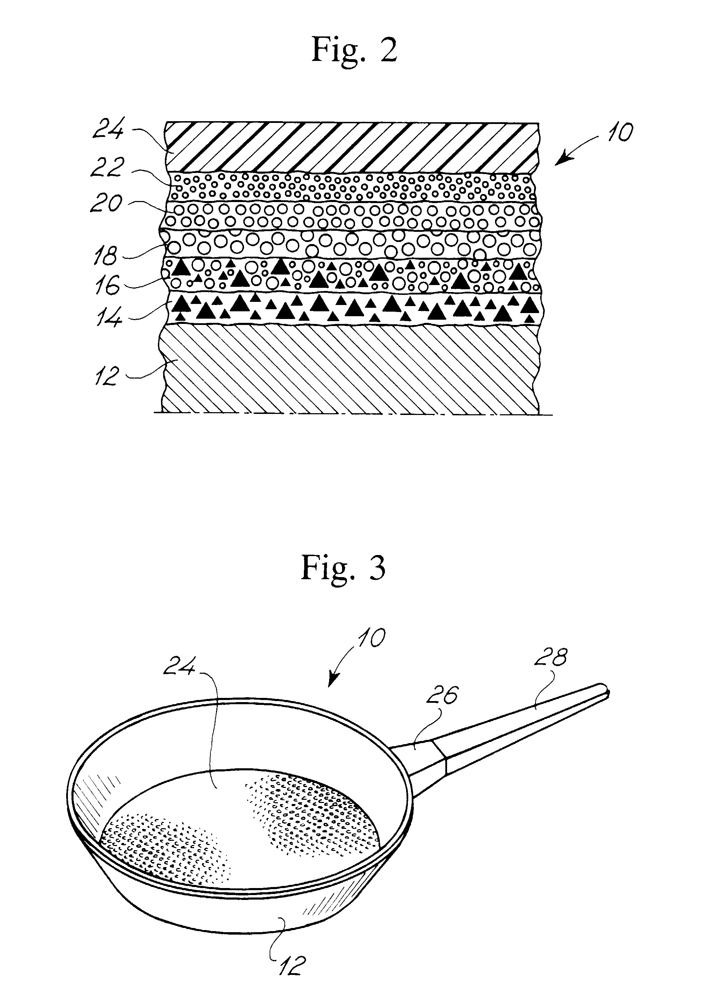

Fig. 3 shows an example of a kitchen utensil, or to be more explicit a frying pan, manufactured in accordance with the method according to the present invention, i.e. manufactured by means of a technique according to which a ceramic layer is first built up by means of plasma spraying and to which layer an antiadhesion layer, particularly a PTFE or Teflon®-containing slip layer, is subsequently applied. Thus, the frying pan comprises a core body in the form of a cast aluminium body 12 on which, as shown in Fig. 2, a layer structure is built up. Inside the frying pan 10 a slip layer 24 is applied in the form of a PTFE layer. Moreover, the frying pan 10 has a console 26 extending outwardly from the core body 12 and to which a handle 28, preferably a handle of an insulating material, such as a temperature resistant plastic material or bakelite, is mounted.

Fig. 2 shows as stated above a vertical section of the frying pan 10, shown in Fig. 3. The core body 12 is shown in the bottom and to this core body a first layer 14 is applied in the form of an adhesion primer layer which is built up of nickel powder of particles or grains of varying size, as shown symbolically in Fig. 2 with a signature comprising full-drawn triangles of varying size symbolising the nickel powder. To the layer 14 a layer of aluminium oxide is applied indicated with the signature of a circle mixed with a share of the same nickel powder of which the layer 14 is built up. Thus, the layer 16 comprises a varying particle size of aluminium oxide powder and a smaller share of nickel powder also of varying particle size. A layer of aluminium oxide powder of a relatively large particle size is applied to the layer 16, and a layer 20 of aluminium oxide powder of a smaller particle size compared with the layer 18 is applied to the layer 18. An aluminium oxide powder layer 22 of an even smaller particle size compared with the particles sizes used in the layers 18 and 20 is applied to the layer 20. The PTFE layer 24 is applied on top of the aluminium oxide powder 22.

It is to be pointed out in connection with the layer structure described above that the layer 16 could be omitted as exactly the provision of the titanium oxide layer 14 permits an adhesion of aluminium oxide powder to the core body 12. Alternatively, the layers 14 and 16 can be totally omitted which, however, according to the experience of the applicant causes a poorer adhesion of the aluminium oxide powder to the aluminium core body 12. Furthermore, fewer or more aluminium oxide powder layers than the three layers 18, 20 and 22 shown in Fig. 2 may be used, just as the layers may comprise a varying particle size. In any case, in accordance with the basic realisation for the present invention, a top layer is established by plasma technique which top layer is made from the smallest particles in order to establish the closest particle structure which, as experience has shown, results in the best adhesion of the slip layer 24, independent of the question whether the slip layer has been established in one- or two-component technique. In addition to a varying number of aluminium oxide layers mixed powders in the form of powders of varying particle size may alternatively be used just as nickel powder of a varying particle size is used for the nickel primer layer shown in Fig. 2. According to the teachings of the present invention a particle size decreasing from the surface of the body towards the adhesion layer is used for establishing the closest and, thus, best adhering surface towards the adhesion layer which can be established according to the prior at, for instance disclosed in DE 36 04 762.

It is to be pointed out that the above nickel powder for the adhesion primer layer may be composed of a mixture or an alloy of chromatium, nickel or nickel aluminium, as described in the above-mentioned German patent publication. Crucial for establishing the adhesion primer layer is, however, that a nickel-containing powder is used. The aluminium oxide particles described above may instead be composed of titanium oxide or alternatively a titanium aluminium oxide alloy or a mixture of aluminium oxide and titanium oxide. The above particles in the layers 14-22 typically have a grain size from 5-20 µm as a particle or a grain of a size, i.e. a diameter or a dimension equivalent thereto of 5 µm, is considered to be a small particle or a small grain, whereas a particle or a grain of a diameter or a dimension equivalent thereto of 20 µm is considered to be a large particle or a large grain. Normally, the individual layers 14, 16, 18, 20 and 22 do not contain just a single particle or grain layer, which also appears from the signature in Fig. 2, but will typically be built up of various individual layers lying above each other and, thus, have a thickness of between 10 µm and 60 µm, first of all dependent on the used particle or grain size.

For the antiadhesion layer 24 an arbitrary one-component teflon enamel may be used which is subsequently hardened by a burning, typically at a temperature of between 250° and 350°. Alternatively, a two-component enamel system of a primer enamel and a teflon-containing baking enamel may be used, as examples of commercially accessible enamels are described in numerous patent publications and are delivered customer-specified by the firm of Weilburger Lackfabrik, Weilburg, Germany. Thus, commercially accessible two-component enamel systems from the supplier in question contain pure primer enamels without coloured pigment and teflon as well as primer enamels with both coloured pigment and teflon.

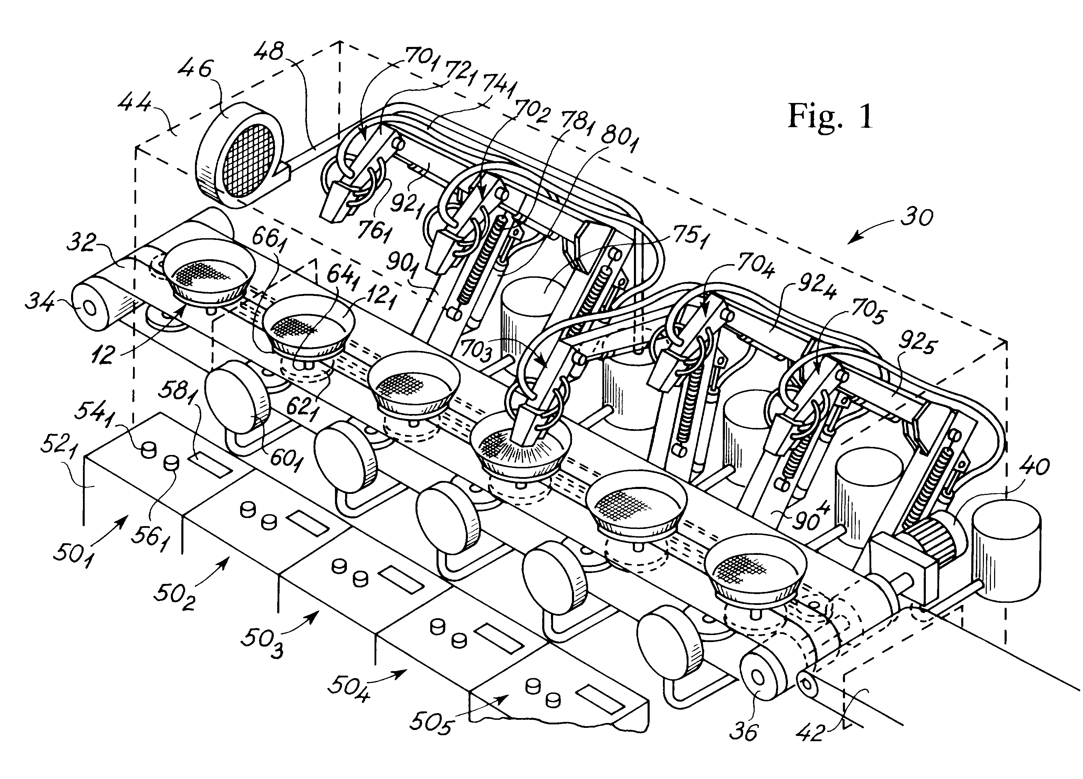

Fig. 1 shows in detail a schematic and perspective view of a plant for carrying out the method according to the present invention, i.e. for the application of a layer divided ceramic structure to the surface of a core body, preferably an aluminium core body with an upper or outer ceramic layer implemented with a grain size as small as possible for providing the closest and, thus, best adhering surface com-pared with the later applied PTFE containing enamel. The plant in Fig. 1 is designated the reference numeral 30 and comprises a two-part assembly line 32 which is led round two rollers 34 and 36 of which the roller 36 is a driven roller driven by a motor 40. In the left side of the drawing a core body 12 is shown which is mounted on a rotary disc and is resting on the two-part assembly line 32. Thus, the piece 12 is led from the left to the right in the drawing by means of the assembly line 32 which may be moved intermittently or continuously or continuously with varying speed through five stations in all, which will be described in detail below.

From the two-part assembly line 32 the plasma coated pan pieces are transferred to another assembly line 42 by means of which the plasma coated pieces are led to a PTFE application plant, which may in principle be constructed in the same way as the plasma application robots shown in Fig. 1.

The plasma application to the individual pieces 12 is made in an enclosed chamber, in Fig. 1 shown schematically in dotted lines and designated the reference 44. From the chamber 44 a ventilation is carried out by means of a ventilator 46 which is, furthermore, by a channel 48 connected with the individual plasma application stations, which will be described more detailed below. In Fig. 1 five individual robots belonging to five separate stations 50¹, 50², 50³, 50⁴, and 50⁵ are provided for establishing the five layers 14, 16, 18, 20 and 22 shown in Fig. 2, as in the first station the same index ¹ is used for all components, and correspondingly the same index, ² , ³, ⁴ and ⁵ respectively, is used for the 2nd, the 3rd, the 4th and the 5th station. For all five stations the same two numbers are used for the same components or equivalent components as the affiliation of a component is indicated by the index belonging to the station number. Thus, the first station 50¹ has a control console 52¹ containing two control regulators 54¹ and 56¹ for adjusting the mixing ratio between the powders which are mixed and applied in the station in question. The mixing ratio together with other relevant information, such as plasma application temperature, powder consumption etc. is shown on a display 58¹. In the first station 50¹ a rotary disc 62¹ is provided which may be coupled to a supporting disc 66¹ by means of a lifting device 64¹ on which disc the piece 12 is mounted. By activating the lifting device 64¹ the unworked piece 12 is, thus, lifted from the supporting mounting on the two-part assembly line 32 and is set rotating by means of the rotary disc 62¹. Opposite the piece 12 supported on the support 66¹ a plasma applying robot 70¹ is mounted comprising an arm 72¹ which can be moved towards the piece 12 by means of an hydraulic cylinder 80¹ as the reset of the robot arm to the position of the robot arm 72¹ shown in Fig. 1 is established by means of a spring 78¹. The arm 72¹ itself is mounted on another arm 92² and is supplied with plasma powder through a feed conduit 74¹. The arm 92² is pivotally mounted on a supporting console arm 90¹. The plasma application itself in the station 50¹ occurs after the robot arm 70¹ has been led down towards the piece 12 to a position corresponding to the position of the robot arm 70³ in the station 50³ whereupon by activating the plasma powder supply a release of plasma particles takes place during heating in an arc for applying the particles by plasma application to the piece 12. The various stations may work individually as regards application time, heating time, application quantity etc., but are synchronised so that the transfer of a not plasma applied piece to the first station 50¹, and correspondingly a shift from the first station to another station and so on, through the plant takes place simultaneously by means of the two-part assembly line.

As those skilled in the art will appreciate a larger or smaller number of robots and correspondingly a larger or smaller number of individual stations may be provided in the plant 30 shown in Fig. 1 for establishing a larger or smaller number of layers on the unworked piece, corresponding to the layers 14, 16, 18, 20 and 22 in Fig. 2. According to the teachings of the present invention it is, however, of decisive importance that exactly the upper, i.e. the last applied layer, the layer 22 shown in Fig. 2, is established with the smallest ceramic particles in order to establish a surface which is close and as even as possible and which is subsequently coated by means of preferably robots for applying the antiadhesion layer prior to the burning of the antiadhesion layer.

An actual description of the application of the antiadhesion layer will not be given as this application per se forms a part of the prior art and may be realised by using a single component or alternatively a two-component system, as described in numerous older publications.

## Claims

1. Method for coating a core body, preferably a core body of aluminium, in kitchen utensils, by which method various layers of hard ceramic powder of one or more materials are first applied by means of plasma spraying and in which an anti-adhesion layer is applied to the ceramic layer or layers established of hard ceramic powder material by plasma spraying in one or more steps characterized in that the last applied ceramic layer is established by using a hard ceramic powder of a smaller average grain size compared with the other ceramic powder layers.

2. Method according to claim 1 characterized in that the average grain size of the individually applied layers of hard ceramic powder decreases from the core body towards the antiadhesion layer.

3. Method according to claim 1 or claim 2 characterized in that a nickel-containing adhesion primer layer is applied as a first plasma application step.

4. Method according to claim 3 characterized in that the layer of hard ceramic powder which is applied to the nickel-containing adhesion primer layer contains a share of nickel powder.

5. Method according to claim 3 or claim 4 characterized in that the adhesion primer layer has a thickness of 1-20 µm, preferably 1-10 µm, such as 5-10 µm.

6. Method according to any of the claims 1-5 characterized in that the individual ceramic layers have a thickness of 1-50 µm, such as 5-40 µm, preferably 5-20 µm.

7. Method according to any of the claims 1-6 characterized in that the average grain size of the finest used ceramic powder is between 5 and 20 µm and that the size of the coarsest used ceramic powder is between 10 and 40 µm.

8. Method according to any of the claims 1-7 characterized in that a total of four ceramic powders is applied to an applied nickel-containing adhesion primer layer wherein the ceramic layer applied to the first applied, nickel-containing adhesion primer layer preferably contains a smaller share, such as less than 50%, for instance 10-40%, such as 20-30% nickel powder.

9. Method according to any of the claims 1-8 characterized in that the antiadhesion layer is applied in one single step by applying a one-component teflon-containing baking enamel.

10. Method according to any of the claims 1-8 characterized in that the antiadhesion layer is applied in two steps by first applying a pigment-containing primer enamel and subsequently applying a teflon-containing baking enamel also containing pigments.
